Europäisches Patentamt

European Patent Office

Office européen des brevets

(11) Veröffentlichungsnummer: **0 351 499 B1**

(12) **EUROPÄISCHE PATENTSCHRIFT**

(45) Veröffentlichungstag der Patentschrift: **09.12.92**

(21) Anmeldenummer: **89106781.1**

(22) Anmeldetag: **15.04.89**

(51) Int. Cl.⁵: **F16C 29/06**

(54) **Umlaufführung für Wälzkörper.**

(30) Priorität: **16.07.88 DE 3824191**

(43) Veröffentlichungstag der Anmeldung:
**24.01.90 Patentblatt 90/04**

(45) Bekanntmachung des Hinweises auf die
Patenterteilung:
**09.12.92 Patentblatt 92/50**

(84) Benannte Vertragsstaaten:
**DE ES FR GB IT**

(56) Entgegenhaltungen:
EP-A- 0 164 540    DE-A- 2 123 529
DE-A- 2 455 291    DE-A- 2 747 841
DE-A- 2 838 777    DE-C- 974 929
FR-A- 2 516 613

(73) Patentinhaber: **Jacob, Werner**
**Briandring 29**
**W-6000 Frankfurt/Main 70(DE)**

(72) Erfinder: **Jacob, Werner**
**Briandring 29**
**W-6000 Frankfurt/Main 70(DE)**

(74) Vertreter: **Harwardt, Günther, Dipl.-Ing.**
**HARWARDT NEUMANN PATENTANWÄLTE**
**Scheerengasse 2 Postfach 1455**
**W-5200 Siegburg 2(DE)**

EP 0 351 499 B1

# Beschreibung

Die Erfindung betrifft eine Umlaufführung mit Wälzkörpern, einem Grundkörper mit zwei parallel zueinander verlaufenden Bahnabschnitten und zwei beide verbindenden Umlenkbogen, wobei einer der Bahnabschnitte als Tragbahnabschnitt ausgebildet ist, aus dem die Wälzkörper zwecks Anlage an der Leitschienenlaufbahn hervortreten, und deren anderer Bahnabschnitt als Rückführungsabschnitt gestaltet ist und mit den Umlenkbogen zur lastfreien Führung zumindest teilweise geschlossen ausgebildet ist, welche jeweils Laufbahnen für die Wälzkörper aufweisen, und wobei Käfigelemente zur Führung der Wälzkörper vorhanden sind, welche Führungsansätze aufweisen, die in Führungsnuten eingreifen, die sich parallel zur Mittelpunktsbahn (MB) der Wälzkörper in den Bahnabschnitten und den Umlenkbogen erstrecken und wobei die Führungsansätze im Querschnitt linsenförmig convex ausgebildet sind.

Eine derartige Ausbildung einer Umlaufführung ist aus der DE-A-2 123 529 bekannt. Dabei sind die Käfigelemente jeweils als von den Wälzkörpern unabhängige Zwischenstücke gestaltet. Jeweils zwei Zwischenstücke nehmen zwischen sich in konkaven Ausnehmungen einen als Rolle gestalteten Wälzkörper auf. Bei einer solchen Ausbildung ist die Führungsqualität in erheblichem Maße von dem sich einstellenden Endspiel abhängig.

Aus der DE-A 2 455 291 ist eine Umlaufführung bekannt, bei der jeweils zwei Wälzkörper in einem gemeinsamen Käfigelement gehalten sind. Zur Führung in Führungsnuten sind die Wälzkörperstirnflächen überragende bügelförmige Führungsflächen vorgesehen. Diese Anordnung erfordert relativ große Umlenkradien im Bereich der Umlenkbogen.

Bei Lagerungsanordnungen, bei denen die Auflast durch Zylinderrollen aufweisende Umlaufführungen aufgenommen wird, sind die Zylinderrollenachsen in den Tragbahnabschnitten, aber auch in den Umlenkbögen und dem Rückführungsabschnitt stets so über einen Käfig geführt, daß sie parallel zueinander in einer Ebene ausgerichtet gehalten sind. Sie bilden eine Art Kette. Da Horizontal- und Vertikalkräfte aufzunehmen sind, müssen zwei Führungen vorgesehen sein, deren Zylinderrollenachsen im Winkel von 90° zueinander angeordnet sind. Für eine Führung eines Schlittens mit einer Abstützung in einer Vertikalrichtung und zu zwei Horizontalrichtungen sind also insgesamt vier Rollenumlaufschuhe mindestens erforderlich.

Es ist an sich bekannt, daß Rollen mit schräg gestellter Achse, deren Achsen sich kreuzen, Horizontal- und Vertikallasten übernehmen können.

Der Erfindung liegt die Aufgabe zugrunde, eine Umlaufführung für Wälzkörper zu schaffen, bei der diese sicher über den gesamten Weg geführt und Zwängungen vermieden werden. Dabei soll das Führungsprinzip auf alle Gattungen von Wälzkörpern, mindestens jedoch auf Kugeln und Zylinderrollen anwendbar sein und ferner soll eine Vormontage der Wälzkörper möglich sein, so daß der Zusammenbau der Führung vereinfacht wird.

Diese Aufgabe wird erfindungsgemäß dadurch gelöst, daß je der der Wälzkörper in einem separaten Käfigelement seitlich eingefaßt aufgenommen ist, welches zu den benachbarten Käfigelementen als konvexe Zylinderteilflächen ausgebildete Flächen aufweist, deren Achsen senkrecht zur Mittelpunktsebene durch die Mittelpunkte der Wälzkörper verlaufen und daß die in die Führungsnuten eingreifenden Führungsansätze ebenfalls senkrecht zur Mittelpunktsebene verlaufen.

Durch die Zuordnung eines einzelnen Käfigelementes zu jedem Wälzzkörper ist gewährleistet, daß ein Klemmen vermieden und trotzdem eine wirksame Halterung und Führung für die Wälzkörper erreicht wird. Durch die Käfigelemente in Verbindung mit den Führungsansätzen können die Umlaufführungen kassettenartig ausgebildet sein, wobei gewährleistet ist, daß die Wälzkörper auch im nichteingebauten Zustand nicht aus dem offenen Tragabschnitt herausfallen können. Die einzelnen Käfigelemente sorgen ferner in Verbindung mit den Führungsansätzen und den Nuten dafür, daß eine sichere Überführung aus dem offenen Tragabschnitt in den Bereich der Umlaufbogen und zurück erfolgt. Dabei ist aufgrund der einzelnen Käfigelemente mit den Führungsansätzen auch ein Klemmen vermieden. Die Käfigelemente weisen teilzylindrische Außenflächen auf, die sich aneinander abstützen. Durch die linsenförmig konvexe Querschnittsgestaltung der Führungsansätze wird erreicht, daß auch bei engen Toleranzen ein einwandfreier Übergang und damit einwandfreie Weiterbewegung der einzelnen Käfigelemente mit dem Wälzkörper aus den geraden Abschnitten in die Kreisbogenabschnitte und umgekehrt möglich wird.

Es ist vorgeschlagen, daß zewi Führungsansätze je Käfigelement vorhanden sind und daß die Mittenachse der beiden Führungsansätze jedes Käfigelementes mit der Achse der Zylinderteilflächen identisch ist. Es ist jedoch auch möglich, daß mindestens einer der beiden Führungsansätze jedes Käfigelementes eine Mittenachse aufweist, die zur Achse der Zylinderteilflächen und der Mittelpunktsbahn der Zylinderkörper versetzt angeordnet ist. Dabei können die Mittenachsen der Führungsansätze zu verschiedenen Seiten der Mittelpunktsbahn versetzt angeordnet sein.

Die Wälzkörper können in weiterer Ausgestaltung als Kugeln oder Zylinderrollen ausgebildet sein.

Zur Vereinfachung der Montage und Herstellung wird vorgeschlagen, die Käfigelemente zusammenhängend als Band auszubilden und insbesondere aus Kunststoff herzustellen.

Bevorzugt sind jeweils zwei benachbarte Käfigelemente über ein Filmscharnier miteinander verbunden. Dabei sind vorzugsweise nur die Führungsansätzze jeweils zweier benachbarter Käfigelemente durch ein Filmscharnier miteinander beweglich verbunden

Die Umlaufführung soll ferner eine Anordnung der Zylinderrollen und der Laufbahnen an der Leitschiene erlauben, so daß sowohl Horizontal- , als auch Vertikalkräfte übernommen werden können, wobei gewährleistet sein soll, daß die Rollen einwandfrei in allen Abschnitten der Umlaufführung ohne Klemmen geführt werden.

Dies wird dadurch erreicht, daß die Laufbahnen im Grundkörper geneigt zu der die Mittelpunkte aller Zylinderrollen enthaltenden Mittelpunktsebene und parallel zur Mittelpunktsbahn der Zylinderrollen verlaufend angeordnet sind.

Durch eine solche Anordnung wird gewährleistet, daß die Rollenachsen der Zylinderrollen schräg verlaufend angeordnet werden können und somit durch Kombination zweier solcher Umlaufführungen eine Anordnung geschaffen werden kann, die sowohl zur Aufnahme von Vertikal- als auch Horizontalkräften eingesetzt werden kann. Auf diese Art und Weise werden gegenüber den bekannten Lagerungsanordnungen zwei Rollenumlaufschuhe entbehrlich. Für eine Lagerungsanordnung, die Kräfte in beiden Vertikal- und Horizontalrichtungen aufzunehmen in der Lage sein soll, ergibt sich eine Einsparung von vier Rollenumlaufschuhen. Die durch die schräge Anordnung der Zylinderrollen sich verändernden Mittenabstände haben aufgrund dieser Ausbildung keine Auswirkung auf den leichten Lauf und das sichere Überführen in den Bereich der Umlenkbogen. Ein Käfig, wie er beispielsweise in bekannten Wälzführungen für Zylinderrollen eingesetzt wird, kann für Zylinderrollen mit schräg gestellten Achsen nicht benutzt werden, da sich der Käfig in erheblichem Maße den Abstandsänderungen anpassen müßte. Er müßte in Längsrichtung, quer zur Rollenachse der Zylinderrollen, elastisch ausgebildet sein. Eine solche Konstruktion ist jedoch nicht möglich.

In weiterer Ausgestaltung sind nach der Erfindung zwei Laufbahnen, die unterschiedlich zur Mittelpunktsebene geneigt sind, und zwei Sätze von Zylinderrollen vorgesehen.

Es ist möglich, zwei separierte Laufbahnen vorzusehen, wobei die beiden Sätze von Zylinderrollen jeweils abwechselnd einer der Laufbahnen, eine Kreuzrollenlagerung bildend, zugeordnet sind. Dabei schließen die Laufbahnen einen Winkel von 90° zwischen sich ein. Trotzdem, daß die Zylinderrollen mit abwechselnd schräg verlaufender Neigung der Rollenachsen der Umlaufführung zugeordnet werden, ist nur eine Art von Käfigelementen erforderlich. Die jeweils andere Neigungsanordnung der Rollenachse kann durch einfaches Verdrehen des die Zylinderrolle enthaltenden Käfigelementes bei der Montage erreicht werden. Die Käfigelemente sorgen außerdem dafür, daß die Zylinderrollen im Bereich der Umlenkbögen nicht aneinander anstoßen können. Kreuzweise angeordnete Zylinderrollen haben außerdem den Vorteil, daß sie eine exakte Ausrichtung der Führung, d.h. der Kassette, die die Wälzkörper enthält, gegenüber der Leitschiene gewährleisten. Darüberhinaus können also mit einer einzigen Wälzkörperreihe sowohl Auflagekräfte, als auch Seitenkräfte in zwei Richtungen übernommen werden. Es wird eine exakte Zentrierung nach Art eines Prismas erreicht.

Es ist ferner vorgeschlagen, zwei versetzte Reihen von Zylinderrollen vorzusehen, deren Rollenachsen sich zwischen den beiden Mittelpunktsebenen schneiden.

Hierdurch wird eine Baueinheit geschaffen, bei der die eine Reihe in einer Richtung geneigt verlaufende Rollenachsen aufweisende Zylinderrollen besitzt, während die Achsen der Zylinderrollen der anderen Reihe entgegengesetzt geneigt sind. Beide sind in einer Kassette zu einer Baueinheit zusammengefaßt.

Für den Fall, daß eine Umlaufführung der Zylinderrollen mit abwechselndem Neigungsverlauf der Rollenachsen, vorgesehen ist, ist die Länge der Zylinderrollen geringer zu bemessen als deren Durchmesser. Hierdurch wird ein Klemmen vermieden.

Ferner ist es zur Vereinfachung der Herstellung möglich, den Grundkörper in der Mittelpunktsebene geteilt auszubilden, wobei jedes dieser Teile jeweils eine Führungsnut aufweist.

Zur Vereinfachung der Herstellung wird ferner vorgeschlagen, die beiden Teile des Grundkörpers als aus Blech umgeformte Schalenelemente auszubilden, denen zur Erzielung der notwendigen Festigkeit Füllstücke zugeordnet sind.

Des weiteren ist vorgesehen, die Führungsnuten durch den Grundkörperteilen zugeordnete Blechformteile zu bilden. Es wird also eine Kante des Grundkörpers selbst zur Führung genutzt. Sie bildet also eine Seitenwandung der Führungsnut, während die andere Seitenwandung durch das Blechformteil gebildet wird.

Bevorzugte Ausführungsbeispiele einer die erfindungsgemäßen Umlaufführungen aufweisenden Lagerungsanordnung sowie verschiedene Ausgestaltungsmöglichkeiten der Ausbildung der Führung sind in der Zeichnung schematisch dargestellt.

Es zeigt
Figur 1
einen Querschnitt durch eine Lagerungsanordnung,

Figur 2

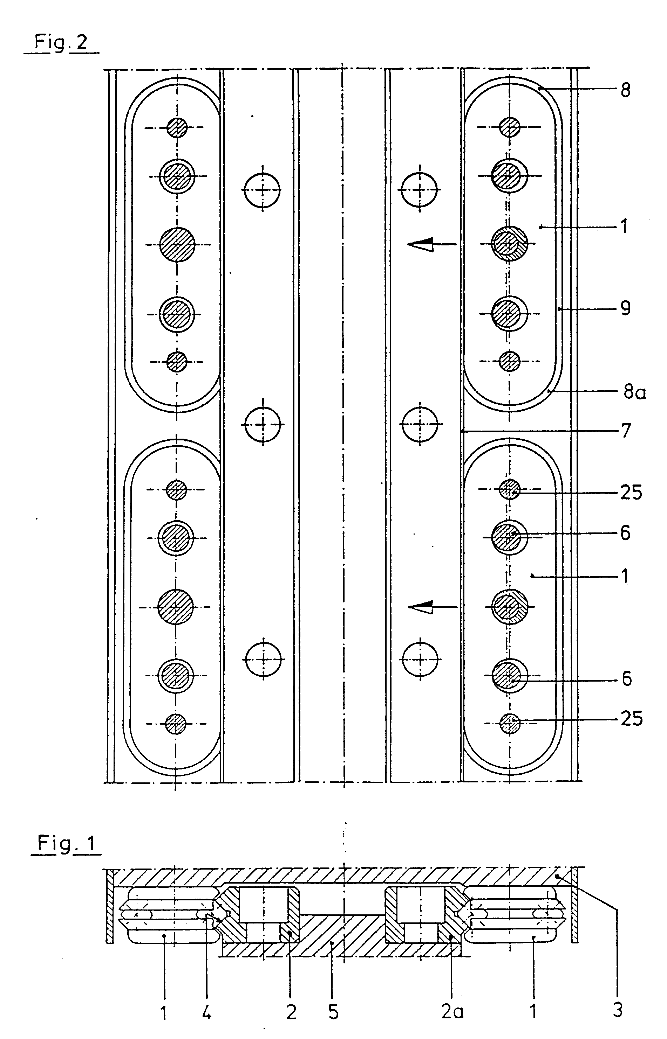

eine Seitenansicht zu Figur 1 bei entferntem Untersupport,

Figur 3

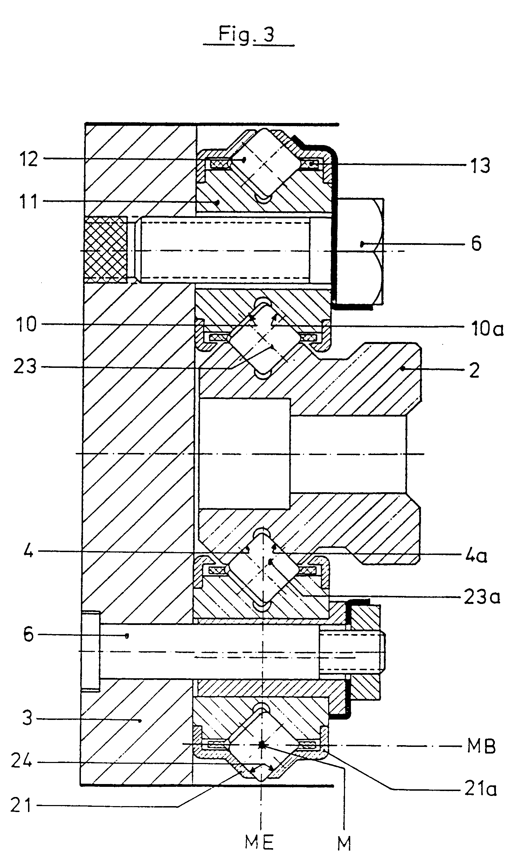

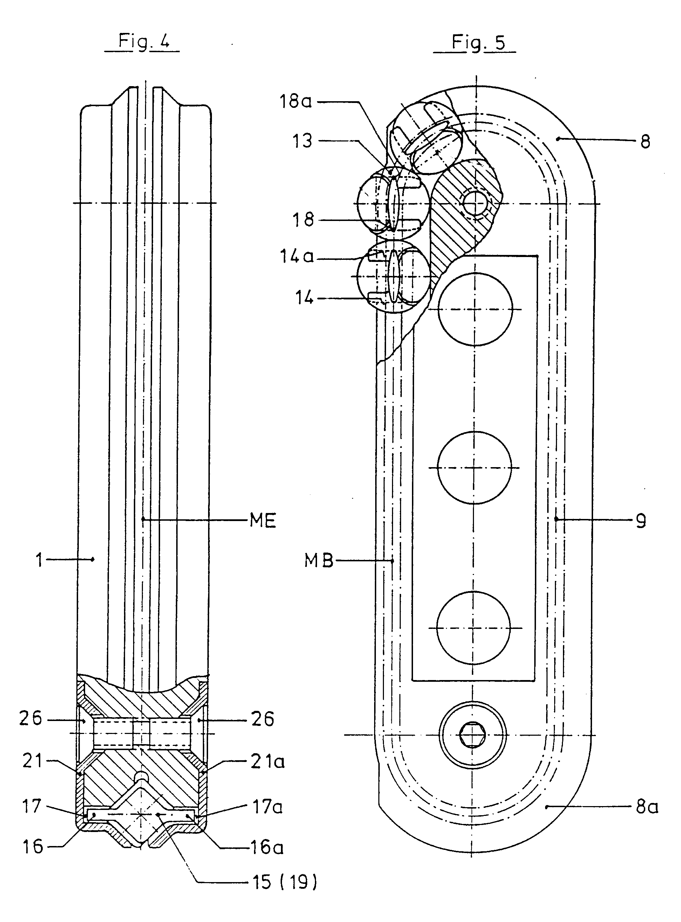

einen Querschnitt durch eine erste Ausführungsform der Umlaufführung mit Kreuzrollen,

Figur 4

eine Seitenansicht, bei der nur eine Kassette der Umlaufführung nach Figur 3 teils in Ansicht, teils geschnitten dargestellt ist,

Figur 5

eine Draufsicht zu Figur 4,

Figuren 6 bis 8

verschiedene alternative Ausführungsformen für die Gestaltung der Umlaufführung im Querschnitt,

Fig. 9

eine Umlaufführung für Kugeln als Wälzkörper und

Fig. 10

einen Teil einer Abwicklung eines Käfigbandes.

Die Lagerungsanordnung, so wie sie in den Figuren 1 und 2 dargestellt ist, besitzt einen Schlitten 3, dem insgesamt vier Kassetten 1, die jeweils eine Umlaufführung umfassen, zugeordnet sind. Die Kassetten 1 sind über Befestigungsschrauben 6 und Paßstifte oder Paßschrauben 25 jeweils mit dem Schlitten 3, den sie führen sollen, verbunden. Die Zylinderrollen der einzelnen Kassetten 1 ragen aus den Kassetten in den geraden Abschnitten, die den Leitschienenabschnitten 2, 2a zugewandt sind, heraus und sind an entsprechenden Leitschienenlaufbahnen 4 geführt. Bei dem in den Figuren 1 und 2 dargestellten Ausführungsbeispiel ist die Leitschiene in zwei Abschnitte unterteilt, von denen jeweils ein Abschnitt 2, 2a zur Zusammenarbeit mit zwei Kassetten 1 vorgesehen ist. Die beiden Leitschienenabschnitte 2, 2a sind an einem Untersupport 5 befestigt.

In den nachfolgenden Zeichnungsfiguren 3 bis 10 sind Details dieser einzelnen Kassetten 1 bzw. Leitschienen 2 2a näher erläutert.

Figur 3 zeigt eine erste Ausführungsform. Zwei Kassetten 1 sind über Befestigungsschrauben 6 an einem Schlitten 3 befestigt und gemeinsam gegenüber der Leitschiene 2 verfahrbar. Jede der beiden Kassetten 1 umfaßt jeweils eine Umlaufführung für abwechselnd geneigt angeordnete Zylinderrollen 12, 12a. Für jede Kassette 1 besitzt die Leitschiene 2 zwei Laufbahnen 4, 4a. Die sichtbaren Wälzkörper 12 stützen sich einerseits an der Laufbahn 10 des Grundkörpers 11 und andererseits an der Laufbahn 4 der Leitschiene 2 ab. Die Wälzkörper 12 gleiten mit einer Stirnfläche ohne Last an der anderen Leitschienenlaufbahn 4a. Die Zylinderrolle 12 dreht sich beim Abwälzen um ihre Achse 23. Die Laufbahn 10 erstreckt sich geneigt zu einer gedachten Ebene ME, die durch die Mittelpunkte M aller Zylinderrollen 12, die in einer Umlaufführung zusammengefaßt sind, verläuft. Ferner verläuft die Laufbahn 10 parallel zu der Mittelpunktsbahn MB, die die Zylinderrollen 12, 12a bzw. deren Mittelpunkte M bei der Bewegung in der Umlaufführung zurücklegen.

Die Zylinderrolle 12 verdeckt die dahinterliegende Zylinderrolle 12a, deren Rollenachse 23a die Rollenachse 23 kreuzt. Die Zylinderrolle 12a stützt sich einerseits an der Laufbahn 10a des Grundkörpers 11 und andererseits an der Leitschienenlaufbahn 4a ab. Es ist ersichtlich, daß die beiden Laufbahnen 10, 10a des Grundkörpers 11 und die Laufbahnen 4, 4a der Leitschiene 2 jeweils einen Winkel von 90° einschließen. Die Zylinderrollen 12, 12a sind, damit ein Klemmen vermieden wird, unterquadratisch ausgebildet. Dies bedeutet, daß ihre Länge geringer bemessen ist, als ihr Durchmesser. Dementsprechend ist auch beispielsweise ein Spiel zwischen den Stirnflächen der Rollen und der jeweils anderen Laufbahn 10 und 4 vorhanden.

Jeder Zylinderrolle 12 bzw. 12a ist ein Käfigelement 13 zugeordnet, das aus den Figuren 4 und 5 näher ersichtlich ist. Dieses Käfigelement 13 besitzt Führungsansätze 16, 16a, die in Führungsnuten 17 bzw. 17a geführt sind. Die Führungsnuten 17, 17a erstrecken sich über den gesamten Verlauf der Umlaufführung und dienen insbesondere im offenen Bereich, das ist der Bereich, in dem die Zylinderrollen 12, 12a an den Laufbahnen 4, 4a der Leitschienen 2 anliegen, zur Führung der Zylinderrollen 12, 12a. Die Führungsnuten 17, 17a können auf verschiedene Art und Weise gebildet werden. Bei dem Ausführungsbeispiel nach Figur 3 werden die Führungsnuten durch die Seitenflächen des Grundkörpers 11 in Verbindung mit Blechformteilen 21, 21a dargestellt, wobei die Blechformteile 21, 21a zusätzlich noch dazu dienen, eine Gegenlaufbahn oder Führungslaufbahn 24 für die Zylinderrollen 12, 12a, insbesondere im Bereich der Umlenkbogen und im Rückführungsabschnitt zu bilden.

Figur 4 zeigt eine Kassette 1 in der Seitenansicht, teilweise geschnitten, und Figur 5 die gleiche Kassette in Draufsicht, ebenfalls teilweise geschnitten. Aus den beiden Zeichnungsfiguren ist ersichtlich, daß die Blechformteile 21, 21a die Seitenkanten des Grundkörpers 11 überdecken und zwar so, daß Nuten 17, 17a gebildet werden. Die Blechformteile 21, 21a sind über Schrauben 26 mit dem Grundkörper 11 verbunden. Die Führungsnuten 17, 17a erstrecken sich parallel zur Mittelpunktsbahn MB der Zylinderrollen 12, 12a. Dies ist die Bahn, die der Mittelpunkt M einer Zylinderrolle 12, 12a über einen Umlauf zurücklegt. Die Zylinderrollen 12, 12a sind, wie insbesondere aus Figur 5 ersichtlich, abwechselnd geneigt angeordnet. Sie werden seitlich von einem Käfigelement 13 umfaßt. Jedes Käfigelement 13 weist im Bereich zu dem nächsten Käfigelement 13 Zylinderteilflächen 14, 14a auf, deren Achse 15 (siehe Figur 4) rechtwinkelig zu der Ebene ME, die sich zwischen den Mittelpunkten M aller in der Kassette 1 aufgenommenen Zylinderrollen 12, 12a aufspannt und ebenfalls durch den Mittelpunkt M der aufgenommenen Zylinderrollen 12, 12a verläuft. Ferner besitzen die einzelnen Käfigelemente 13 sich in einer Ebene, die rechtwinkelig zu der Mittelpunktsebene ME verläuft, erstreckende Führungsansätze 16, 16a. Dabei können, wie aus dem Ausführungsbeispiel nach Figur 4 und 5 ersichtlich, die Führungsansätze 16, 16a so angeordnet sein, daß ihre Mittenachse 19 mit der Achse 15 der Zylinderteilflächen 14, 14a zusammenfällt oder es kann aber auch ein Versatz vorgesehen sein, wie er im Zusammenhang mit der Zeichnungsfigur 7 erläutert ist.

Der Führungsansatz 16 ist in der Führungsnut 17 und der Führungsansatz 16a in der Führungsnut 17a geführt. Da im Umlenkungsbereich, d.h. dem Bereich der Überführung aus der Geraden in den Umlenkbogen die Gefahr des Klemmens gegeben sein kann, wenn nicht genügend Spiel für die Führungsansätze 16, 16a in den Nuten 17, 17a vorgesehen ist, ist zur Erzielung enger Führungstoleranzen eine linsenförmige Ausbildung der Führungsansätze 16, 16a im Querschnitt vorgesehen. Die Führungsansätze 16, 16a weisen zu den Enden 18, 18a, also in die beiden Bewegungsrichtungen für die Zylinderkörper 12, 12a in der Leitschiene 2 hin, einen verjüngten Querschnitt auf. Sie sind linsenförmig ausgebildet, ihre Begrenzungsflächen weisen im wesentlichen eine Krümmung auf, die der des Umführungsradius, d.h. dem äußeren Begrenzungsradius der Führungsnuten 17, 17a, also deren größten Radius in etwa entspricht. Aufgrund der Führung wird ein weicher Übergang und Übertreten der Zylinderrollen 12, 12a aus dem offenen Bereich, der zur Anlage der Zylinderrollen 12, 12a an den Laufbahnen 4, 4a der Leitschienen 2, 2a erforderlich ist, in den Bereich der Umlenkbogen erreicht. Ferner wird auch erreicht, daß die Zylinderrollen 12, 12a in dem offenen Bereich gehalten werden. Hierdurch kann eine Kassettenbauform erreicht werden. Es ist also möglich, vormontierte Baueinheiten von Umlaufführungen zu schaffen, die dann vom Kunden nach seinen Wünschen jeweils einem Schlitten und einer Leitschiene zugeordnet werden können.

Aus Figur 5 ist auch erkenntlich, daß nur eine Ausführungsform von Käfigelementen 13 erforderlich ist, um eine wahlweise Zuordnung der Zylinderrollen 12, 12a mit unterschiedlichen Neigungsanordnungen ihrer Rollenachse vornehmen zu können.

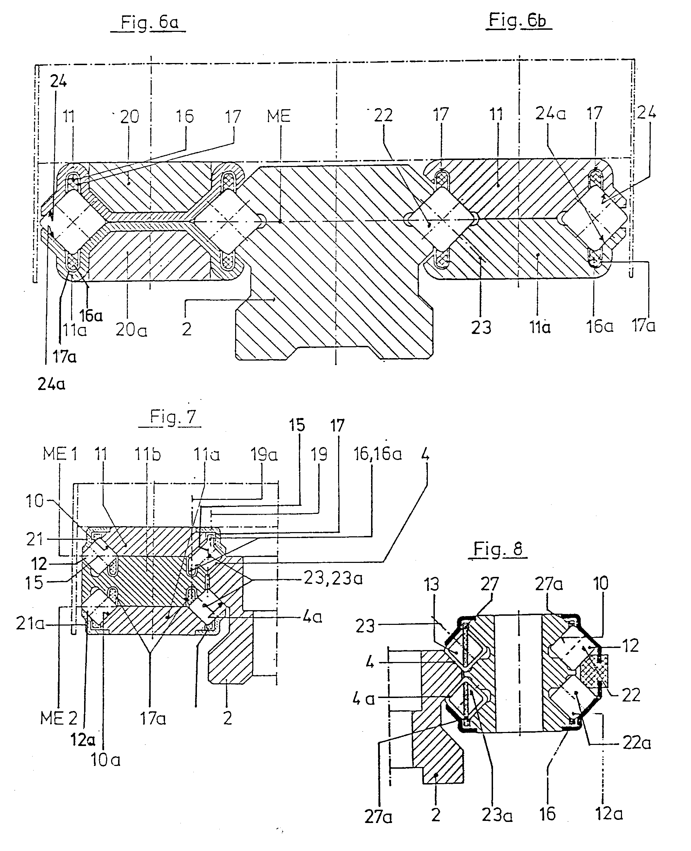

Bei der Ausführung nach der Zeichnungsfigur 6 sind einer Leitschiene 2 unterschiedlich ausgestaltete Umlaufführungen zugeordnet. So ist der linken Hälfte der Zeichnung, die die Zeichnungsfigur 6a darstellt, eine Kassette zu entnehmen, die einen aus zwei Blechteilen hergestellten Grundkörper 11, 11a umfaßt. Die beiden Grundkörperteile 11, 11a sind durch Pressen hergestellt, wobei gleichzeitig die Nuten 17 und 17a eingeformt wurden, ebenso, wie die Führungsflächen 24, 24a im Bereich der Umlenkbogen und der Rückführungslaufbahn. Ferner sind der Einfachheit halber aus Figur 6a nur die Führungsansätze 16, 16a ersichtlich, die den Führungsnuten 17, 17a zugeordnet sind. Bei der in der rechten Zeichnungshälfte (Figur 6b) dargestellten Ausführungsform ist der Grundkörper ebenfalls geteilt ausgebildet und zwar in der Mittelpunktsebene ME. Die beiden Hälften 11, 11a sind massiv ausgebildet. Die beiden Führungsnuten 17, 17a und im Bereich des Umlenkbogens und der Rückführungslaufbahn und die beiden Führungsflächen 24, 24a sind durch Biegen von Materialteilen oder Fließpressen erzeugt worden.

Bei der Ausführungsform nach Figur 6a ist der Grundkörper 11, 11a zweigeteilt ausgebildet. Die Trennung erfolgte im Bereich der Mittelpunktsebenen ME. Die Führungsnuten 17, 17a sind jeweils in die beiden Grundkörperteile 11, 11a eingearbeitet.

Figur 7 zeigt eine andere Ausführungsform, wobei zwei Umlaufführungen in einer Kassette 1 zusammengefaßt sind. Der Grundkörper besteht aus drei Bauteilen, nämlich den Teilen 11, 11a und 11b. Die beiden Teile 11, 11a umfassen jeweils eine Laufbahn 10 bzw. 10a und die Leitschiene 2 diesen jeweils zugeordnete Laufbahnen 4, 4a. Die Zylinderrollen 12, die den Laufbahnen 10 des Grundkörpers 11 und 4 der Leitschiene 2 zugeordnet sind, sind entgegengerichtet mit ihren Rollenachsen 23 geneigt zu der Mittelpunktsebene ME1, die die Mittelpunkte M der Zylinderrollen 12 enthält, angeordnet, wie die Zylinderrollen 12a zur Mittelpunktsebene ME 2, so daß sich die Achsen 23 und 23a der beiden Zylinderrollen 12 und 12a zwischen den beiden Mittelpunktsebenen ME 1 und ME 2 schneiden. Die Führungsnuten 17 werden ebenfalls durch die Seitenkanten der Grundkörperelemente 11, 11a in Verbindung mit den Blechformteilen 21, 21a gebildet. Die Führungsnuten 17a sind jedoch dem zentralen Grundkörperteil 11b zugeordnet. Es ist ferner ersichtlich, daß die Käfigelemente versetzte Führungsansätze 16, 16a aufweisen. Die Führungsnuten 17, 17a und Führungsansätze 16, 16a sind also mit Mittenachsen 19, 19a versehen, die versetzt zur Mittenachse 15 der Zylinderteilflächen 14, 14a verlaufen. Die Führungsnuten 17, 17a sind also parallelversetzt zu der Mittelpunktsbahn MB der Mittelpunkte M der Zylinderrollen 12, 12a.

Bei der Ausführungsform nach Figur 8 sind ebenfalls zwei Rollenreihen 22, 22a vorgesehen, deren Zylinderrollen 12, 12a unterschiedlich geneigte Rollenachsen 23, 23a besitzen. Hinsichtlich der mit den Laufbahnen 4, 4a der Leitschiene 2 in Kontakt stehenden Rollen ist der Schnitt so gelegt, daß er durch die Trennstelle zweier aneinander angrenzender Käfigelemente 13 hindurchverläuft. Es handelt sich um Käfigelemente 13, die als Band aneinanderhängend gefertigt sind. Im Bereich der aneinanderangrenzenden Zylinderteilflächen sind die Käfigelemente 13 über ein Filmscharnier 27 miteinander verbunden. Das endlose Band von über die Filmscharniere aneinanderhängenden Käfigelemente 13 ist aus Kunststoff hergestellt. Bevorzugt ist jedoch nur eine Verbindung im Bereich der Führungsansätze 16 gegeben. Aufgrund der zusammenhängenden Ausführung ist auch nur ein Führungsansatz 16 erforderlich, da die zusätzliche Abstützung durch die als Plastikformteile ausgebildete Abdeckung und ein Bord zwischen den beiden Laufbahnen im Grundkörper vorgenommen wird.

Aus der Zeichnungsfigur 9 ist schließlich eine Ausbildung der Umlaufführung mit Kugeln als Wälzkörper 12 bzw. 12a ersichtlich. Die Schnittfläche verläuft dabei durch den Mittelpunkt der Wälzkörper 12. Es ist ebenfalls ersichtlich, daß zwei Führungsansätze 16, 16a am Käfigelement 13 vorgesehen sind.

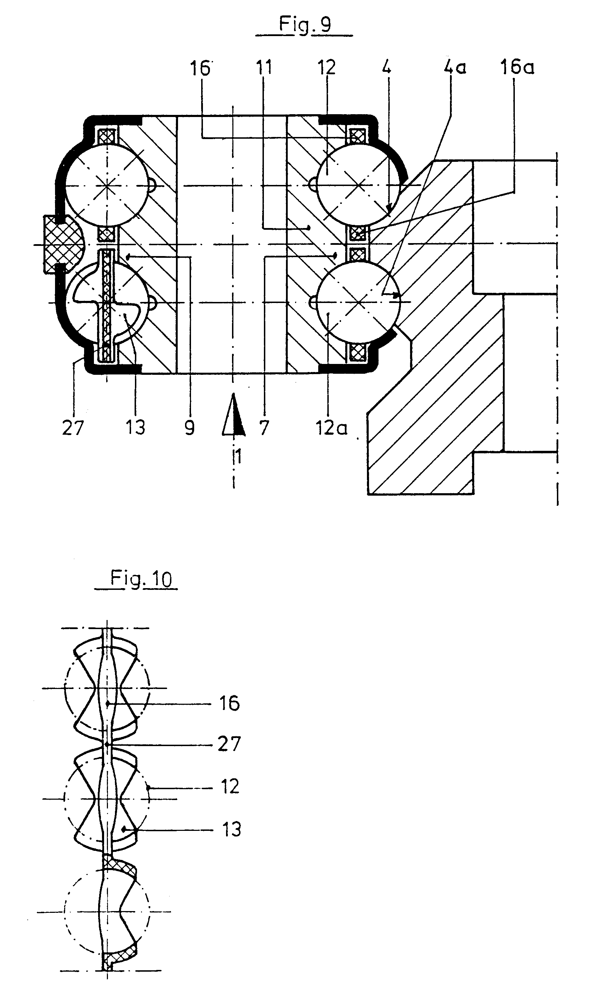

In Figur 10 ist in abgewickelter Form ein aus aneinanderhängend gefertigten Käfigelementen 13 bestehendes Käfigband dargestellt, wie es z.B. für eine Umlaufführung nach Figur 9 benutzt werden kann. Die einzelnen Käfigelemente 13 sind im Bereich ihrer Führungsansätze 16, 16a miteinander durch ein Filmscharnier 27 verbunden. Dieses Filmscharnier 27 erlaubt eine Beweglichkeit um eine Hochachse, so daß die einzelnen Käfigelemente 13 einandergegenüber Winkelpositionen einnehmen können und sich dabei mit ihren teilzylindrischen Außenflächen gegeneinander abstützen können.

**Patentansprüche**

1.    Umlaufführung mit Wälzkörpern, einem Grundkörper (11,11a,11b) mit zwei parallel zueinander verlaufenden Bahnabschnitten (7,9) und zwei beide verbindenden Umlenkbogen(8,8a), wobei einer der Bahnabschnitte als Tragbahnabschnitt (7) ausgebildet ist, aus dem die Wälzkörper (12,12a) zwecks Anlage an der Leitschienenlaufbahn (4,4a) hervortreten, und deren anderer Bahnabschnitt als Rückführrungsabschnitt (9) gestaltet ist und mit den Umlenkbogen (8,8a) zur lastfreien Führung zumindest teilweise geschlossen ausgebildet ist, welche jeweils Laufbahnen für die Wälzkörper aufweisen, und wobei Käfigelemente (13,13a) zur Führung der Wälzkörper (12,12a) vorhanden sind, welche Führungsansätze (16,16a) aufweisen, die in Führungsnuten (17,17a) eingreifen, die sich parallel zur Mittelpunktsbahn (MB) der Wälzkörper in den Bahnabschnitten und den Umlenkbogen erstrecken und wobei die Führungsansätze (16,16a) im Querschnitt linsenförmig convex ausgebildet sind, dadurch gekennzeichnet, daß jeder der Wälzkörper (12, 12a) in einem separaten Käfigelement (13, 13a) seitlich eingefaßt aufgenommen ist, welches zu den benachbarten Käfigelementen (13) als konvexe Zylinderteilflächen(14, 14a) ausgebildete Flächen aufweist, deren Achsen (15) senkrecht zur Mittelpunktsebene (ME) durch die Mittelpunkte (M) der Wälzkörper (12, 12a) verlaufen und daß die in die Führungsnuten (17,17a) eingreifenden Führungsansätze (16,16a) ebenfalls senkrecht zur Mittelpunktsebene (ME) verlaufen.

2.    Umlaufführung nach Anspruch 1, dadurch gekennzeichnet, daß zwei Führungsansätze je Käfigelement vorhanden sind und daß die Mittenachse (19) der beiden Führungsansätze (16, 16a) jedes Käfigelementes (13) mit der Achse (15) der Zylinderteilflächen (14, 14a) identisch ist.

3.    Umlaufführung nach Anspruch 1, dadurch gekennzeichnet, daß zwei Führungsansätze je Käfigelement vorhanden sind und daß mindestens einer der beiden Führungsansätze (16, 16a) jedes Käfigelementes (13) eine Mittenachse (19, 19a) aufweist, die zur Achse (15) der Zylinderteilflächen (14, 14a) und der Mittelpunktsbahn (MB) der Wälzkörper (12, 12a) versetzt angeordnet ist.

4.    Umlaufführung nach Anspruch 3, dadurch gekennzeichnet, daß die Mittenachsen (19, 19a) der Führungsansätze (16, 16a) zu verschiedenen Seiten der Mittelpunktsbahn (MB) versetzt angeordnet sind.

5.    Umlaufführung nach Anspruch 1, dadurch gekennzeichnet, daß die Wälzkörper (12,12a) als Kugeln ausgebildet sind.

6.    Umlaufführung nach Anspruch 1, dadurch gekennzeichnet, daß die Wälzkörper (12,12a) als Zylinderrollen ausgebildet sind.

7. Umlaufführung nach Anspruch 1,
dadurch gekennzeichnet,
daß die Käfigelemente (13) zusammenhängend als Band ausgebildet sind und insbesondere aus Kunststoff bestehen.

8. Umlaufführung nach Anspruch 7,
dadurch gekennzeichnet,
daß jeweils zwei benachbarte Käfigelemente (13) über ein Filmscharnier (27,27a) miteinander verbunden sind.

9. Umlaufführung nach Anspruch 8,
dadurch gekennzeichnet,
daß die Führungsansätze (16,16a) jeweils zweier benachbarter Käfigelemente (13) durch ein Filmscharnier (27, 27a) miteinander verbunden sind.

10. Umlaufführung nach Anspruch 6,
dadurch gekennzeichnet,
daß die Laufbahnen (10,10a) im Grundkörper (11) geneigt zu der die Mittelpunkte (M) aller Zylinderrollen (12, 12a) enthaltenden Mittelpunktsebene (ME) und parallel zur Mittelpunktsbahn (MB) der Zylinderrollen (12, 12a) verlaufend angeordnet sind.

11. Umlaufführung nach Anspruch 10,
dadurch gekennzeichnet,
daß zwei Laufbahnen (10, 10a), die unterschiedlich zur Mittelpunktsebene (ME) geneigt sind, und zwei Sätze von Zylinderrollen (12, 12a) vorgesehen sind.

12. Umlaufführung nach Anspruch 11,
dadurch gekennzeichnet,
daß die beiden Sätze von Zylinderrollen (12, 12a) jeweils abwechselnd einer der Laufbahnen (10, 10a), eine Kreuzrollenlagerung bildend, zugeordnet sind.

13. Umlaufführung nach Anspruch 11,
dadurch gekennzeichnet,
daß die Laufbahnen (10, 10a) einen Winkel von 90° zwischen sich einschließen.

14. Umlaufführung nach den Ansprüchen 6 und 10,
dadurch gekennzeichnet,
daß zwei versetzte Reihen (22, 22a) von Zylinderrollen (12, 12a) vorgesehen sind, deren Rollenachsen (23, 23a) sich zwischen deren beiden Mittelpunktsebenen (ME1, ME2) schneiden.

15. Umlaufführung nach Anspruch 12,
dadurch gekennzeichnet,
daß die Länge der Zylinderrollen (12, 12a) geringer bemessen ist, als deren Durchmesser.

16. Umlaufführung nach Anspruch 1,
dadurch gekennzeichnet,
daß der Grundkörper (11, 11a) in der Mittelpunktsebene (ME) geteilt ausgebildet ist und die Teile jeweils eine Führungsnut (17, 17a) aufweisen.

17. Umlaufführung nach Anspruch 16,
dadurch gekennzeichnet,
daß die beiden Teile des Grundkörpers (11, 11a) als aus Blech umgeformte Schalenelemente ausgebildet sind, denen Füllstücke (20, 20a) zugeordnet sind.

18. Umlaufführung nach Anspruch 1,
dadurch gekennzeichnet,
daß die Führungsnuten (17, 17a) durch den Grundkörperteilen (11, 11a) zugeordneten Blechformteilen (21, 21a) gebildet sind.

**Claims**

1. A circulation guide having rolling members, a base member (11, 11a, 11b) with two track portions (7, 9) extending parallel to one another and two deflecting arches (8, 8a) connecting said track portions, one of the track portions being designed as a carrying track portion (7) from which the rolling members (12, 12a) emerge for the purpose of contacting the guiding rail track (4, 4a) and the other track portion being designed as a return portion (9) and being at least partially enclosed together with the deflecting arches (8, 8a) to ensure load-free guidance, said track portions each comprising tracks for the rolling members, and with cage elements (13, 13a) provided for guiding the rolling members (12, 12a) and comprising guiding projections (16, 16a) engaging guiding grooves (17, 17a) extending parallel to the centre track (MB) of the rolling members in the track portions and in the deflecting arches, the guiding projections (16, 16a) being designed to have a lenticular convex cross-section,
characterised in
that each rolling member (12, 12a) is accommodated in a separate cage element (13, 13a) so as to be received laterally, said cage element comprising faces which are designed as cylindrical faces (14, 14a) convex towards the adjoining cage elements (13) and whose axes (15) extend perpendicularly relative to the centre plane (ME) through the centres (M) of the rolling members (12, 12a) and that the guiding projections (16, 16a) engaging the guiding grooves (17, 17a) also extend perpendicularly relative to the centre plane (ME).

2. A circulation guide according to claim 1, characterised in
that there are provided two guiding projections per cage element and that the central axis (19) of the two guiding projections (16, 16a) of each cage element (13) is identical with the aids (15) of the cylindrical faces (14, 14a).

3. A circulation guide according to Claim 1, characterised in
that there are provided two guiding projections per cage element and that at least one of the two guiding projections (16, 16a) of each cage element (13) comprises a central axis (19, 19a) which is arranged so as to be offset relative to the axis (15) of the cylindrical faces (14, 14a) and the centre track (MB) of the rolling members (12, 12a).

4. A circulation guide according to claim 3, characterised in
that the central axes (19, 19a) of the guiding projections (16, 16a) are arranged so as to be offset towards different sides of the centre track (MB).

5. A circulation guide according to claim 1, characterised in
that the rolling members (12, 12a) are designed as balls.

6. A circulation guide according to claim 1, characterised in
that the rolling members (12, 12a) are designed as cylindrical rollers.

7. A circulation guide according to claim 1, characterised in
that the cage elements (13) are designed to be interconnected to form a strip and especially consist of plastics.

8. A circulation guide according to claim 7, characterised in
that in each case, two adjoining cage elements (13) are connected to one another by a film hinge.

9. A circulation guide according to claim 8, characterised in
that the guiding projections (16, 16a) of two adjoining cage elements (13) are connected to one another by a film hinge (17, 17a).

10. A circulation guide according to claim 6, characterised in
that the tracks (10, 10a) in the base member (11) are arranged so as to be inclined relative to the centre plane (ME) containing the centres (M) of all cylindrical rollers (12, 12a) and parallel to the centre track (MB) of the cylindrical rollers (12, 12a).

11. A circulation guide according to claim 10, characterised in
that there are provided two tracks (10, 10a) inclined in opposite directions relative to the centre plane (ME) and two sets of cylindrical rollers (12, 12a).

12. A circulation guide according to claim 11, characterised in
that the two sets of cylindrical rollers (12, 12a) are alternately associated with one of the tracks (10, 10a) so as to form a cross-type roller bearing.

13. A circulation guide according to claim 11, characterised in
that the tracks (10, 10a) enclose an angle of 90°.

14. A circulation guide according to claims 6 and 10, characterised in
that there are provided two offset rows (22, 22a) of cylindrical rollers (12, 12a) whose roller axes (23, 23a) intersect between their two centre planes (ME1, ME2).

15. A circulation guide according to claim 12, characterised in
that the length of the cylindrical rollers (12, 12a) is shorter than their diameter.

16. A circulation guide according to claim 1, characterised in
that the base member (11, 11a) is designed to be divided in the centre plane (ME) and that the parts each comprise a guiding groove (17, 17a).

17. A circulation guide according to claim 16, characterised in
that the two parts of the base (11, 11a) are designed as dish elements which are formed of plate metal and associated with filler pieces (20, 20a).

**18.** A circulation guide according to claim 1, characterised in
that the guiding grooves (17, 17a) are formed by formed plate metal parts (21, 21a) associated with the base member (11, 11a).

**Revendications**

**1.** Patin à recirculation de corps roulants comprenant des corps roulants, un corps de base (11, 11a, 11b) comportant deux segments de chemin (7, 9) s'étendant parallèlement entre eux, et deux arcs de renvoi (8, 8a) réunissant les segments de chemin, l'un des segments de chemin constituant un segment de chemin porteur (7), sur lequel les corps roulants (12, 12a) font saillie pour s'appuyer contre le chemin (4, 4a) de roulement du rail de guidage, et dont l'autre segment de chemin constitue un segment de retour (9), et est au moins partiellement fermé à l'aide des arcs de renvoi (8, 8a) pour le guidage non porteur, lesquels segments présentent respectivement des chemins de roulement pour les corps roulants, cependant qu'il est prévu des éléments de cage (13, 13a) pour le guidage des corps roulants (12, 12a), éléments qui présentent des ailettes de guidage (16, 16a) qui sont engagés dans des rainures de guidage (17, 17a) qui s'étendent parallèlement à la trajectoire (MB) des centres des corps roulants dans les segments de chemin de roulement et dans les arcs de renvoi, et les ailettes de guidage (16, 16a) étant d'une configuration convexe en forme de lentille en section transversale,
caractérisé
en ce que chacun des corps roulants (12, 12a) est logé, encadré latéralement, dans un élément de cage séparé (13, 13a), qui présente, vers les éléments de cage (13) adjacents, des surfaces constituées par des surfaces de segments de cylindres convexes (14, 14a) et dont les axes passent perpendiculairement au plan (ME) des centres, par les centres (M) des corps roulants (12, 12a) et en ce que les ailettes de guidage (16, 16a) engagées dans les rainures de guidage (17, 17a) s'étendent elles aussi perpendiculairement au plan (ME) des centres.

**2.** Patin à recirculation de corps roulants selon la revendication 1,
caractérisé
en ce qu'il est prévu deux ailettes de guidage par élément de cage et
en ce que l'axe géométrique (19) des deux ailettes de guidage (16, 16a) de chaque élément de cage (13) est confondu avec l'axe (15)
des surfaces de segments de cylindres (14, 14a).

**3.** Patin à recirculation de corps roulants selon la revendication 1,
caractérisé
en ce qu'il est prévu deux ailettes de guidage par élément de cage et
en ce qu'au moins l'une des deux ailettes de guidage (16, 16a) de chaque élément de cage (13) présente un axe géométrique (19, 19a) qui est déporté par rapport à l'axe (15) des surfaces de segments de cylindres (14, 14a) et par rapport de la trajectoire (MB) des centres des corps roulants (12, 12a).

**4.** Patin à recirculation de corps roulants selon la revendication 3,
caractérisé
en ce que les axes géométriques (19, 19a) des ailettes de guidage (16, 16a) sont déportés vers des côtés différents de la trajectoire (MB) des centres.

**5.** Patin à recirculation de corps roulants selon la revendication 1,
caractérisé
en ce que les corps roulants (12, 12a) sont constitués par des billes.

**6.** Patin à recirculation de corps roulants selon la revendication 1,
caractérisé
en ce que les corps roulants (12, 12a) sont constitués par des rouleaux cylindriques.

**7.** Patin à recirculation de corps roulants selon la revendication 1,
caractérisé
en ce que les éléments de cage (13) sont réalisés sous la forme d'une bande continue, et sont en particulier composés de matière plastique.

**8.** Patin à recirculation de corps roulants selon la revendication 7,
caractérisé
en ce que deux éléments de cage (13) adjacents sont reliés l'un à l'autre par une charnière film (27, 27a).

**9.** Patin à recirculation de corps roulants selon la revendication 8,
caractérisé
en ce que les ailettes de guidage (16, 16a) appartenant à deux éléments de cage (13) adjacents sont reliées l'une à l'autre par une charnière film (27, 27a).

**10.** Patin à recirculation de corps roulants selon la revendication 6, caractérisé en ce que les chemins de roulement (10, 10a) formés dans le corps de base (11) sont inclinés par rapport au plan (ME) des centres, qui contient les centres (M) de tous les rouleaux cylindriques (12, 12a) et s'étendent parallèlement à la trajectoire (MB) des centres des rouleaux cylindriques (12, 12a).

**11.** Patin à recirculation de corps roulants selon la revendication 10, caractérisé en ce qu'il est prévu deux chemins de roulement (10, 10a), qui sont inclinés différemment sur le plan (ME) des centres, et deux jeux de rouleaux cylindriques (12, 12a).

**12.** Patin à recirculation de corps roulants selon la revendication 11, caractérisé en ce que les deux jeux de rouleaux cylindriques (12, 12a) sont associés en alternance à l'un et à l'autre des chemins de roulement (10, 10a) pour former un roulement à rouleaux croisés.

**13.** Patin à recirculation de corps roulants selon la revendication 11, caractérisé en ce que les chemins de roulement (10, 10a) forment entre eux un angle de 90°.

**14.** Patin à recirculation de corps roulants selon les revendications 6 et 10, caractérisé en ce qu'il est prévu deux rangées décalées (22, 22a) de rouleaux cylindriques (12, 12a) dont les axes (23, 23a) des rouleaux se coupent entre leurs deux plans de centres (ME1, ME2).

**15.** Patin à recirculation de corps roulants selon la revendication 12, caractérisé en ce que la longueur des rouleaux cylindriques (12, 12a) est plus petite que leur diamètre.

**16.** Patin à recirculation de corps roulants selon la revendication 1, caractérisé en ce que le corps de base (11, 11a) est divisé dans le plan (ME) des centres, et les deux parties présentent chacune une rainure de guidage (17, 17a).

**17.** Patin à recirculation de corps roulants selon la revendication 16, caractérisé en ce que les deux parties du corps de base (11, 11a) sont constitués par des coquilles en tôle emboutie, auxquelles sont combinées des pièces de remplissage (20, 20a).

**18.** Patin à recirculation de corps roulants selon la revendication 1, caractérisé en ce que les rainures de guidage (17, 17a) sont formées par des pièces en tôle emboutie (21, 21a) combinées aux parties (11, 11a) du corps de base.

Fig. 2

8

1

9

8a

7

25

6

1

6

25

Fig. 1

1    4          2    5          2a          1          3

## Fig. 3

12

13

11

6

10

10a

23

2

4

4a

23a

6

3

24

MB

21a

21

ME    M

Fig. 4

Fig. 5

Fig. 6a        Fig. 6b

Fig. 7

Fig. 8

## Fig. 9

16    11    12    4    4a    16a

27    13    9    I1    7    12a

## Fig. 10

16

27

12

13